(19) Europäisches Patentamt / European Patent Office / Office européen des brevets

(11) **EP 3 394 667 B1**

(12) **FASCICULE DE BREVET EUROPEEN**

(45) Date de publication et mention
de la délivrance du brevet:
**08.01.2020 Bulletin 2020/02**

(21) Numéro de dépôt: **16825866.3**

(22) Date de dépôt: **16.12.2016**

(51) Int Cl.:
***G02F 1/1343*** *(2006.01)*

(86) Numéro de dépôt international:
**PCT/FR2016/053493**

(87) Numéro de publication internationale:
**WO 2017/109346 (29.06.2017 Gazette 2017/26)**

(54) **DISPOSITIF ÉLECTRO-OPTIQUE POUR LA DÉTECTION DE LA MODIFICATION LOCALE D'UN CHAMP ÉLECTRIQUE**

ELEKTROOPTISCHE VORRICHTUNG ZUR ERKENNUNG LOKALER VERÄNDERUNGEN IN EINEM ELEKTRISCHEN FELD

ELECTRO-OPTICAL DEVICE FOR DETECTING LOCAL CHANGE IN AN ELECTRIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2015 FR 1563144**

(43) Date de publication de la demande:
**31.10.2018 Bulletin 2018/44**

(73) Titulaires:
• **CENTRE NATIONAL DE LA RECHERCHE SCIENTIFIQUE (CNRS)**
**75016 Paris (FR)**
• **Université Grenoble Alpes**
**38400 Saint-Martin-d'Hères (FR)**

(72) Inventeurs:
• **BELLOIR, Tiphaine**
**38000 Grenoble (FR)**
• **LECARME, Olivier**
**38100 Grenoble (FR)**
• **HONEGGER, Thibault**
**38000 Grenoble (FR)**

(74) Mandataire: **Regimbeau**
**20, rue de Chazelles**
**75847 Paris Cedex 17 (FR)**

(56) Documents cités:
**US-A1- 2014 022 465**

**Description**

DOMAINE DE L'INVENTION

La présente invention concerne le domaine de la détection optique à l'aide d'un dispositif électro-optique comprenant une couche de cristaux liquides à polarisation variable active.

Par « à polarisation variable active», on entend tout type de cristaux liquides permettant, pour un faisceau incident polarisé linéairement en entrée de la couche de cristaux liquides, de faire varier la direction de polarisation dudit faisceau incident en sortie de ladite couche de cristaux liquides en fonction de la présence ou de l'absence d'un champ électrique appliqué à ladite couche de cristaux liquides.

Des cristaux liquides à polarisation variable active sont par exemple des cristaux liquides en configuration nématique en hélice, plus connue sous l'anglicisme «twisted nematic», ci-après configuration TN par concision ; des cristaux liquides à alignement vertical, ou encore à commutation dans le plan.

En configuration TN :

- la polarisation dudit faisceau incident en sortie de ladite couche de cristaux liquides est perpendiculaire à la polarisation dudit faisceau incident en entrée de ladite couche de cristaux liquides lorsqu'ils ne sont soumis à aucun champ électrique ; et
- la polarisation dudit faisceau incident en sortie de ladite couche de cristaux liquides est parallèle à la polarisation dudit faisceau incident en entrée de ladite couche de cristaux liquides lorsqu'ils sont soumis à un champ électrique ; et

Avec des cristaux liquides à alignement vertical, ou à commutation dans le plan :

- la polarisation dudit faisceau incident en sortie de ladite couche de cristaux liquides est parallèle à la polarisation dudit faisceau incident en entrée de ladite couche de cristaux liquides lorsqu'ils ne sont soumis à aucun champ électrique ; et
- la polarisation dudit faisceau incident en sortie de ladite couche de cristaux liquides est perpendiculaire à la polarisation dudit faisceau incident en entrée de ladite couche de cristaux liquides lorsqu'ils sont soumis à un champ électrique.

On entend indistinctement polarisation linéaire et rectiligne. De préférence, l'axe de polarisation d'une polarisation rectiligne est parallèle au plan des couches d'alignement décrites ultérieurement.

L'utilisation des cristaux liquides en configuration TN est connue, par exemple pour certains écrans d'affichage.

En configuration TN, les cristaux liquides sont confinés en couche mince entre deux couches d'alignement. Chaque couche d'alignement comprend une direction d'alignement dans le plan de la couche. Les cristaux liquides au voisinage de la couche présentent un directeur, c'est-à-dire une direction moyenne d'alignement des cristaux liquides, parallèle à la direction d'alignement. Les deux couches d'alignement sont disposées de sorte que leurs directions d'alignement sont perpendiculaires. Ainsi, entre les deux couches d'alignement, les cristaux liquides présentent un directeur vrillé, qui tourne graduellement d'une couche vers l'autre.

Lorsqu'une différence de potentiel est appliquée entre les deux couches d'alignement, les cristaux liquides ne sont plus vrillés mais parallèles entre eux et parallèles au champ électrique ainsi généré.

Cet effet est utilisé par exemple pour certains afficheurs à cristaux liquides (LCD), où chaque couche d'alignement est couplée à un polariseur rectiligne, de sorte que les deux polariseurs sont croisés ; ce qui permet, en combinaison avec un miroir, de pouvoir réfléchir une lumière incidente ou non (https://fr.wikipedia.org/wiki/Twisted_nematic).

Il est proposé ici une évolution tout à fait astucieuse des cristaux liquides en configuration TN, en particulier pour l'observation de l'activité des neurones.

A ce jour, il existe différentes techniques d'observation des neurones parmi lesquelles les techniques électrophysiologiques d'enregistrement des courants ioniques transitant à travers les membranes cellulaires, plus connues sous l'anglicisme « patch-clamp ». Ces techniques permettent une très bonne résolution mais à l'échelle d'un ou de quelques neurones au maximum. Cependant, la quantité de neurones observés simultanément est restreinte et ces techniques présentent en outre un caractère invasif.

Il existe également les réseaux de micro-électrodes ou MEA, qui permettent la mesure directe du potentiel à proximité des cellules par des électrodes. Toutefois, les MEA ne présentent pas de résolution au niveau d'un neurone individuel et présentent un rapport signal sur bruit relativement élevé. En outre, à ce jour, le nombre maximal d'électrodes par MEA est de 1 à 3000, ce qui limite également le nombre total de neurones pouvant être observés.

Enfin, on connait également les techniques de marquage d'activité neuronale et visualisation par fluorescence (imagerie fluorescente de l'activité calcique ou modification génétique des canaux ioniques dont l'activation peut être rendue fluorescente) qui permet de suivre l'activité neuronale à l'échelle d'un seul neurone par sonde fluorescente.

Cependant ces techniques ne permettent pas d'avoir un champ d'observation très large et présentent en outre un caractère invasif.

La présente invention permet de résoudre ces problèmes.

RESUME DE L'INVENTION

Plus précisément, l'invention concerne un dispositif électro-optique pour la détection d'un champ électrique généré localement par un échantillon tel que présenté dans la revendication indépendante 1. D'autres aspects de l'invention sont présentés dans les revendications dépendantes.

Grâce à l'invention, il est possible d'observer des neurones à l'échelle individuelle sur un à quelques pixels, sans contact (non invasif), sans marquage chimique, pendant plusieurs semaines et sur un champ d'observation supérieur à une centaine de $cm^2$.

Grâce à l'invention, il est possible de faire varier la quantité de lumière transmise en contrôlant l'intensité du champ électrique appliqué aux cristaux liquides.

D'autres caractéristiques et avantages de la présente invention apparaîtront plus clairement à la lecture de la description suivante donnée à titre d'exemple illustratif et non limitatif et faite en référence aux figures annexées.

DESCRIPTIF DES DESSINS

la figure 1A illustre un mode de réalisation d'un partie du dispositif selon l'invention dans lequel aucune tension externe n'est appliquée aux cristaux liquides,

la figure 1B illustre le mode de réalisation de la figure 1A dans lequel une tension externe est appliquée aux cristaux liquides,

la figure 2 illustre l'évolution de la réponse optique d'un mode de réalisation d'un dispositif selon l'invention en fonction de la valeur de la tension externe,

la figure 3 illustre un mode de réalisation du dispositif selon l'invention en configuration « réflexion »,

la figure 4A illustre un mode de réalisation du dispositif selon l'invention en configuration « transmission »,

la figure 4B illustre un agrandissement d'une partie de la figure 4A,

la figure 5 illustre un mode de réalisation d'une couche de conducteurs électriques anisotropes selon l'invention,

la figure 6 illustre une couche de conducteurs électriques anisotropes en trois dimensions, et

la figure 7 illustre la distribution spatiale du potentiel électrique vu par les cristaux liquides pour un échantillon comprenant un neurone actif et un neurone inactif.

DESCRIPTION DETAILLEE

L'invention permet de détecter optiquement l'activité électrique d'un échantillon 100. Par échantillon, on entend tout échantillon, en particulier biologique, susceptible de générer ou de modifier localement un champ électrique. Par concision, on ne décrira ici qu'un échantillon sous forme de réseau de neurones, monocouche ou multicouche. L'invention peut être mise en œuvre pour d'autres échantillons, par exemple des axones (nerfs), des tranches de tissus (tranches de cerveaux par exemple) ou des tissus entiers (cerveau), des cellules biologiques présentant des échanges ioniques transmembranaires, notamment en immunologie.

L'échantillon est déposé sur ou dans un support d'échantillon 110, en l'espèce une cellule micro fluidique.

Comme décrit ci-après, l'invention comprend un ensemble d'éléments de même nature ou de même composition, par exemple des couches d'alignement, des polariseurs ou des électrodes. Par convention, pour tout ensemble d'éléments de même nature ou de même composition, on entend par « supérieur » ou « proximal » l'élément dudit ensemble le plus proche dudit échantillon ; et par « inférieur » ou « distal » l'élément le plus loin dudit échantillon.

Par « transparent » on entend transparent à la longueur d'onde centrale du faisceau incident émis par une source lumineuse.

Dans un mode de réalisation, dit « transmission », un faisceau incident, le long de son chemin optique, traverse ledit échantillon avant de traverser des cristaux liquides. Ce mode de réalisation permet notamment l'observation de l'activité d'un réseau de neurones, en particulier in vitro.

Dans un mode de réalisation, dit « réflexion», le faisceau incident, le long de son chemin optique, traverse les cristaux liquides avant ledit échantillon, ce qui permet l'observation de l'activité d'un réseau de neurones en particulier in vivo.

Dans le mode « transmission », ledit échantillon est au moins partiellement transparent.

Le chemin optique est défini par le trajet du faisceau incident dont l'origine est la source lumineuse et la destination est le capteur optique.

## Source lumineuse

On prévoit une source lumineuse 10, de préférence homogène, configurée pour émettre un faisceau incident 90.

Dans le mode « transmission », le faisceau incident est émis de préférence directement en direction de cristaux liquides décrits ci-après. Dans le mode « réflexion », le faisceau incident est émis indirectement en direction de cristaux liquides, c'est-à-dire que celui-ci passe par un séparateur décrit ultérieurement.

Le spectre émis par la source lumineuse peut être polychromatique. De préférence toutefois, on utilisera une source monochromatique ou une source blanche et un ensemble d'au moins un filtre monochromatique, avantageusement dont la longueur d'onde est centrée sur la longueur d'onde pour laquelle la transmission optique des cristaux liquides est optimale pour l'épaisseur de cristaux liquides donnée. Les essais ont été réalisés par le demandeur avec une source monochromatique centrée à 550 nm.

On prévoit que la source lumineuse est activée au moins pour chaque prise de vue, c'est-à-dire image obtenue par le capteur optique décrit ultérieurement à un moment donné.

De préférence, la lumière émise par la source lumineuse est non polarisée, ou polarisée dans un sens parallèle à l'axe de polarisation du premier polariseur rencontré par le faisceau sur le chemin optique (polariseur supérieur dans le mode de réalisation « transmission » et polariseur inférieur dans le mode de réalisation « réflexion »), polariseurs également décrits ultérieurement.

## Cristaux liquides

On prévoit une couche de cristaux liquides 30 à polarisation variable active, de préférence sous forme de couche mince, en particulier dont l'épaisseur est comprise entre 100 nm et 100 $\mu$m et en l'espèce de 4,5 $\mu$m.

De préférence, lesdits cristaux liquides sont en configuration TN. Par exemple, on prévoit des cristaux liquides PCH5 nématiques à 37°C.

L'épaisseur de la couche de cristaux liquides est contrôlée, de sorte à garantir la variation de la polarisation du faisceau incident de 90° sous l'influence d'un champ électrique sur lesdits cristaux liquides.

Le temps de réponse des cristaux liquides est de l'ordre de la micro seconde, ce qui permet un alignement de ceux-ci, donc une observation, quasiment en temps réel.

## Couches d'alignement

Les cristaux liquides sont compris entre deux couches d'alignement, c'est-à-dire une couche d'alignement supérieure 50 et une couche d'alignement inférieure 51, et au contact de celles-ci.

Les couches d'alignement sont nanostructurées par exemple par lithographie dite « nanoimprint » par anglicisme, photolithographie ou autre. Elles sont planes (aux nano structurations prêtes) et parallèles entre elles, et présentent une épaisseur de préférence inférieure à 1mm. Par exemple elles sont constituées de polyméthacrylate de méthyle (PMMA) ou de polyimide.

Pour leur nanostructuration, chaque couche d'alignement comprend un ensemble de sillons, en l'espèce de section transversale rectangulaire, rectilignes, parallèles et équidistants deux à deux, et formés par exemple par moulage. La direction d'alignement de chaque couche d'alignement est définie par le sens d'élongation des sillons. Dans d'autres modes de réalisation, la section transversale est autre que rectangulaire, par exemple sinusoïdale.

Les deux couches d'alignement présentent chacune une direction d'alignement respective.

Au contact d'une couche d'alignement, les cristaux liquides s'alignent selon la direction d'alignement. Les deux directions d'alignement sont perpendiculaires entre elles, ce qui permet au repos d'obtenir des cristaux liquides en configuration TN.

Les cristaux liquides sont maintenus entre les deux couches d'alignement par des espaceurs, par exemple par des microbilles transparentes de SiO2, des piliers micro nanostructurés en polymère ou en verre, etc., déposés par exemple par enduction centrifuge (spincoating) et évaporation solvant ou autre technique équivalente ; l'épaisseur de la couche de cristaux liquides étant contrôlée par la hauteur des espaceurs.

Des essais ont été réalisés avec chaque couche d'alignement enPMMA présentant une épaisseur d'environ 100 nm, chaque sillon présentant une section transversale de 250nm*170nm et deux sillons adjacents étant séparés de 250 nm ; et des microbilles transparentes de SiO2 de 4,5 $\mu$m de diamètre.

Dans un mode de réalisation, l'épaisseur de chaque couche d'alignement est comprise entre 100 nm et 200 nm.

Le faisceau incident est sécant avec les couches d'alignement. De préférence, le faisceau incident est sensiblement perpendiculaire aux couches d'alignement.

On entend par première et deuxième couche d'alignement, respectivement la première couche d'alignement et la deuxième couche d'alignement disposée sur le chemin optique.

Dans le mode de réalisation « transmission », la première couche d'alignement est la couche d'alignement supérieure.

Dans le mode de réalisation « réflexion », la première couche d'alignement est la couche d'alignement inférieure.

Les cristaux liquides peuvent modifier la polarisation de la lumière. Au repos, on a donc avantageusement la direction d'alignement de la première couche d'alignement parallèle à la direction de polarisation du premier polariseur rencontré sur le chemin optique (polariseur supérieur dans le mode de réalisation « transmission » et polariseur inférieur dans le mode de réalisation « réflexion »), les polariseurs étant décrits ultérieurement.

La couche de cristaux liquides encapsulée entre les couches d'alignement est appelée cellule.

## Couche de conducteurs électriques anisotropes

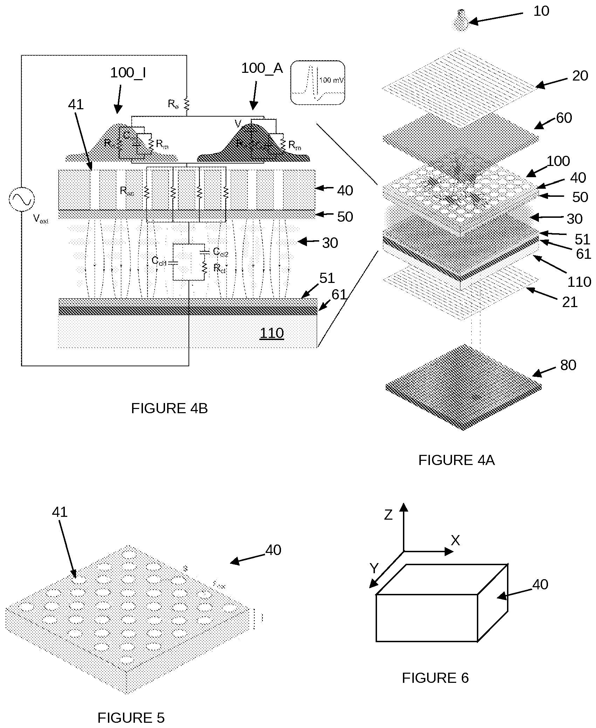

On peut prévoir également une couche de conducteurs électriques anisotropes 40, de préférence plane, d'épaisseur constante et parallèle aux couches d'alignement, par exemple sous forme de membrane, dont un exemple est illustré figure 5.

La couche de conducteurs électriques anisotropes 40 permet la transmission optique du faisceau incident. De préférence, elle est transparente à la longueur d'onde du faisceau incident.

Par « anisotrope » on entend qui ne permet la transmission de lignes de champ que selon une unique direction de propagation. Lorsqu'elle est soumise à un champ électrique, seule la composante dudit champ électrique parallèle à ladite direction de propagation est transmise à travers la couche de conducteurs électriques anisotropes.

Dans un mode de réalisation, la couche de conducteurs électriques anisotropes est une matrice isolante électriquement, percée de trous traversant qui sont remplis d'un conducteur électrique. La couche 40 comprend ainsi un ensemble de conducteurs électriques anisotropes 41 individuels.

On prévoit que la direction de propagation de chaque conducteur électrique anisotrope 41 est sécante, et de préférence perpendiculaire, aux couches d'alignement. De préférence, on prévoit que la direction de propagation de chaque conducteur électrique anisotrope est linéaire et présente un angle d'au plus 45° par rapport à la perpendiculaire aux couches d'alignement.

Par exemple, la couche de conducteurs électriques anisotropes est une matrice de Al2O3 ou de polycarbonate, percée de trous remplis de Poly(3,4-éthylènedioxythiophène), polymère plus connu sous l'acronyme PEDOT, qui est conducteur et transparent. L'axe d'orientation d'un trou traversant définit l'axe d'anisotropie du conducteur électrique correspondant.

En référence à la figure 5, avec :

- S la distance la plus courte séparant deux trous adjacents,
- $r_{nw}$ le rayon d'un trou traversant, et
- l l'épaisseur de la couche de conducteurs électriques anisotropes,

on peut optimiser la transmission optique du dispositif selon l'invention en choisissant la valeur de $r_{nw}$ en fonction de l, de S et de la conductivité électrique du matériau des conducteurs électriques anisotropes.

De préférence, le nombre de conducteurs électriques anisotropes 41 par unité de surface de la couche 40 est inférieur ou égal au nombre de pixels par unité de surface du capteur optique 80.

Alternativement, la couche de conducteurs électriques anisotropes peut être une matrice de nanofils encapsulée dans un isolant (Polycarbonate ou SiO2 ou autre). De sorte qu'on peut prévoir que la direction de propagation de chaque conducteur électrique anisotrope 41 présente une forme en hélice.

Dans un mode de réalisation, la couche de conducteurs électriques anisotropes est un semi-conducteur à grand gap ou un isolant électrique, par exemple en matériau comprenant tout ou partie de l'un parmi SiO2, Si3N4, SiN, matériau plastique (PMMA, PC, PET...), polymère isolant (pyralène, PDMS) . Le SiN présente avantageusement une bonne tenue mécanique.

La figure 6 illustre une couche de conducteurs électriques anisotropes 40 en trois dimensions dans lesquelles l'axe Z est parallèle aux lignes de champ du champ électrique créé entre les deux électrodes et perpendiculaires au plan XY.

Dans ce cas, l'unique direction de propagation est la direction selon l'axe Z.

En effet, selon l'axe X ou selon l'axe Y, la couche 40 présente des dimensions telles que d'éventuelles lignes de champ du champ électrique créé entre les deux électrodes sont atténuées totalement selon l'axe X et l'axe Y respectivement. Ainsi, la couche de conducteurs électriques anisotropes est un isolant électrique selon chacune des directions X et Y.

Selon l'axe Z, la couche de conducteurs électriques anisotropes présente une dimension (épaisseur) telle que les lignes de champ du champ électrique créé entre les deux électrodes sont transmises au moins partiellement. Ainsi, quand bien même le matériau utilisé pour la couche 40 est réputé être un isolant électrique, une épaisseur suffisamment fine de ce matériau permet néanmoins une transmission atténuée du champ électrique. Des essais préalables permettent par exemple de déterminer l'épaisseur de la couche de conducteurs électriques anisotropes à choisir en fonction notamment de la composition chimique de celle-ci et de l'intensité du champ électrique.

En l'espèce, on choisit une épaisseur de couche de conducteurs électriques anisotropes telle que la valeur du champ électrique transmis selon l'axe Z est supérieure ou égale à un pourcentage prédéterminé de la valeur du champ électrique créé entre les deux électrodes.

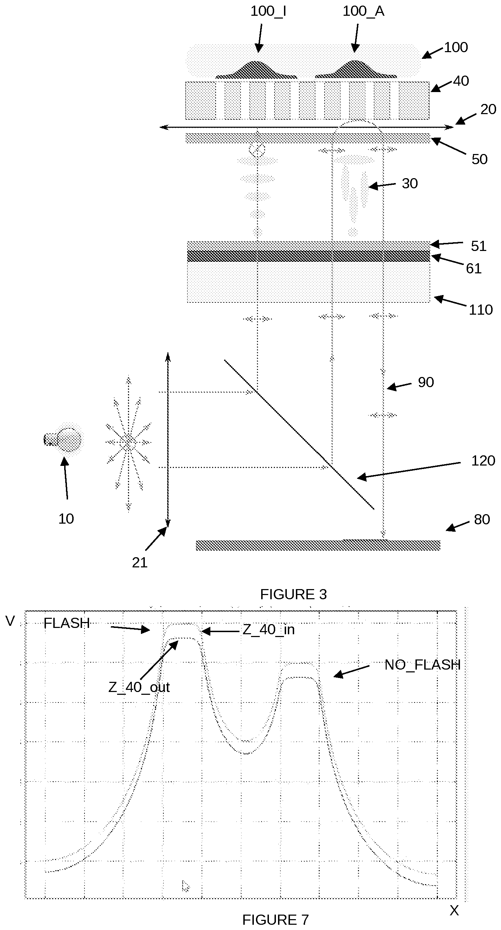

La figure 7 illustre la réponse électrique (en Volts) en fonction de la direction X d'une couche de conducteurs électriques anisotropes 40 de part et d'autre de ladite couche, en l'espèce au regard d'un échantillon comprenant deux neurones.

Le deuxième pic correspond à un neurone inactif NO_FLASH et le premier pic à un neurone actif FLASH. La courbe supérieure Z_40_in représente l'évolution du potentiel électrique pour la face de la couche 40 du côté des neurones (en lien avec la figure 4B), et la courbe inférieure Z_40_out représente l'évolution du potentiel électrique pour la face de la couche 40 du côté opposé aux neurones, c'est-à-dire du côté des cristaux liquides (en lien avec la figure 4B).

La différence entre la courbe supérieure Z_40_in et courbe inférieure Z_40_out illustre l'atténuation du champ électrique par la couche 40. L'atténuation dépend de la nature de la couche 40 mais pas de l'activité ou de l'inactivité de l'échantillon.

La couche de conducteurs électriques anisotropes est disposée entre l'échantillon et la couche d'alignement supérieure, et par exemple au contact de celle-ci.

Dans le mode de réalisation « transmission », la couche de conducteurs électriques anisotropes est de préférence transparente.

Dans le mode de réalisation « réflexion », la couche de conducteurs électriques anisotropes est de préférence réfléchissante.

En mode de réalisation « réflexion », la couche de conducteurs électriques anisotropes comprend avantageusement des nanofils conducteurs d'électricité, en l'espèce de silicium pur ou avantageusement dopé, encapsulés dans une membrane non conductrice d'électricité, en l'espèce en polycarbonate ; la direction des nanofils définissant l'axe d'anisotropie du conducteur. Alternativement, on peut prévoir une membrane d'alumine percée de trous traversant remplis de PEDOT ; l'axe d'orientation des trous traversant définissant l'axe d'anisotropie du conducteur. Dans ce cas, la membrane en polycarbonate ou alumine est avantageusement réfléchissante. On peut également prévoir une membrane en silicium nanoporeux anisotrope.

La composition chimique de la membrane réfléchissante influe sur le contraste optique.

De préférence, la direction de propagation du conducteur électrique anisotrope est perpendiculaire au plan du capteur optique décrit ultérieurement, ce qui évite les offsets de l'image obtenue sur ledit capteur optique.

La couche de conducteurs électriques anisotropes permet de garantir une relation bijective entre la position d'un élément du échantillon générant une modification locale de champ électrique et la position du ou des récepteurs individuels du capteur optique (pixels, photodiode(s)) détectant cette modification.

### Support de l'échantillon

De préférence, on prévoit également au moins un support d'échantillon 110, de préférence plan, rigide ou souple, parallèle aux couches d'alignement et non conducteur d'électricité, en l'espèce une plaque de verre (ou autre type de support de préférence biocompatible), qui permet de soutenir mécaniquement la structure du dispositif.

Par exemple on prévoit un support inférieur, au contact de l'électrode inférieure décrite ci-après. On peut aussi prévoir un support supérieur, par exemple au contact de l'électrolyte décrit ultérieurement.

### Electrodes

On peut prévoir également une paire d'électrode, c'est-à-dire une électrode supérieure 60 et une électrode inférieure 61, de sorte que lorsqu'une tension est appliquée entre ces deux électrodes, il se créé un champ électrique entre les deux électrodes, de préférence uniforme, dans lequel est immergé la couche de cristaux liquides.

Les deux électrodes peuvent être identiques. De préférence, les deux électrodes sont très conductrices, c'est-à-dire présentant une conductivité supérieure à 1 ohm/m à température ambiante. Par exemple les électrodes sont en oxyde d'indium étain (ITO).

Les électrodes peuvent être planes et parallèles aux couches d'alignement. Elles sont de préférence transparentes.

Par exemple l'électrode inférieure est au contact de la couche d'alignement inférieure.

Quelle que soit le mode de réalisation, les électrodes sont disposées de sorte que lorsque la tension externe Vext est appliquée à partir d'une source de tension alternative externe 70, l'échantillon, la couche de conducteurs électriques anisotropes et les cristaux liquides sont soumis à certaines au moins des lignes de champ reliant les deux électrodes.

Dans le mode de réalisation « transmission », l'électrode supérieure est de préférence disposée entre les cristaux liquides et la source lumineuse, plus particulièrement entre l'échantillon et la source lumineuse ; et l'électrode inférieure est disposée par exemple entre la couche d'alignement inférieure et le support. L'électrode supérieure peut être disposée avant ou après le polariseur supérieur le long du chemin optique.

De préférence l'échantillon et l'électrode supérieure baignent dans un même milieu conducteur, en l'espèce un électrolyte liquide. L'électrolyte liquide est une solution saline composée d'ions en solution. Par exemple on prévoit un milieu de culture cellulaire, en l'espèce du Neurobasal (marque déposée).

Dans un mode de réalisation, l'électrode supérieure est à une distance d'environ 1 cm de la couche de conducteurs électriques anisotropes.

Les électrodes sont reliées à une source de tension alternative. De préférence, la tension générée aux bornes de la source de tension, dite « tension externe » Vext, dépend de la nature des cristaux liquides. En l'espèce, pour des cristaux liquides PCH5 nématiques à 37°C, la tension générée aux bornes de la source de tension est comprise entre 2V et 5V.

La tension externe permet d'aligner les cristaux liquides et modifier la polarisation du faisceau incident, de sorte à permettre le passage dudit faisceau incident à travers la couche de cristaux liquides.

En outre, le choix de la valeur de la tension externe Vext permet d'optimiser, voire de garantir, la détection de l'écart de transmittance due à la modification locale de champ électrique, comme exposé dans la partie « fonctionnement ».

**Polariseurs**

On prévoit également au moins deux polariseurs, c'est-à-dire un polariseur supérieur 20 et un polariseur inférieur 21, de préférence plans, éventuellement mous, et dont au moins l'un est perpendiculaire à la direction de propagation du faisceau incident.

Le polariseur supérieur et le polariseur inférieur sont des polariseurs rectilignes, c'est-à-dire qu'ils permettent d'obtenir une lumière polarisée rectilignement selon leur axe de polarisation.

Dans le mode de réalisation « transmission», et contrairement à certains afficheurs LCD évoqués en début de description, les axes de polarisation du polariseur supérieur et du polariseur inférieur sont ici parallèles entre eux pour obtenir un premier contraste, et perpendiculaires entre eux pour obtenir un deuxième contraste, inversé par rapport au premier contraste.

L'un au moins des polariseurs présente un axe de polarisation parallèle à la direction d'alignement d'une des couches d'alignement.

En l'espèce, le polariseur supérieur présente un axe de polarisation parallèle à la direction d'alignement de la couche d'alignement supérieure ; et le polariseur inférieur présente un axe de polarisation perpendiculaire à la direction d'alignement de la couche d'alignement inférieure.

Le polariseur inférieur est disposé entre la couche de cristaux liquides et le capteur optique décrit ci-après ; et de préférence entre le support inférieur et ledit capteur optique.

Le polariseur supérieur est disposé entre la couche de cristaux liquides et la source lumineuse ; et de préférence entre le support supérieur ou l'électrolyte et ladite source lumineuse.

On entend par premier et deuxième polariseur, respectivement le premier polariseur et le deuxième polariseur disposé sur le chemin optique.

Dans le mode de réalisation « transmission », le premier polariseur est le polariseur supérieur.

Dans le mode de réalisation « réflexion », le premier polariseur est le polariseur inférieur.

Dans le mode de réalisation « réflexion », on prévoit que le polariseur supérieur est disposé entre la couche d'alignement supérieure et la couche de conducteurs électriques anisotropes, sur lequel la lumière est réfléchie sans modification de polarisation (par exemple grâce à un silicium 1,0,0) et le polariseur inférieur est alors de préférence perpendiculaire au polariseur supérieur. Le polariseur inférieur peut également être parallèle au polariseur supérieur, ce qui implique toutefois une perte d'intensité lumineuse.

Dans le mode de réalisation « réflexion », on prévoit en outre un séparateur de faisceau 120, en l'espèce une lame séparatrice, en l'espèce à 45°, ou un prisme, disposé entre le polariseur inférieur et les cristaux liquides, telle que le faisceau incident passe par le polariseur inférieur, puis la lame séparatrice, puis les cristaux liquides et, après réflexion, repasse par la lame séparatrice en direction du capteur optique, sans passer par le polariseur inférieur.

De préférence, les polariseurs sont plans et perpendiculaires à la direction de propagation du faisceau incident.

### Capteur optique

On prévoit un capteur optique 80, de préférence matriciel, plan et parallèle aux couches d'alignement, et typiquement un capteur CMOS, CCD ou autre ensemble d'au moins une photodiode. On peut aussi prévoir un objectif de microscope couplé ou non à un capteur CMOS, CCD ou au moins une photodiode. Dans ce cas, le point focal est avantageusement situé dans la couche de cristaux liquides.

De préférence, on prévoit un capteur standard, par exemple existant sur les appareils photo numériques, et par exemple de 16 millions de pixels, où chaque pixel est de 4 $\mu$m * 4 $\mu$m. Dans ce cas, comme l'activité d'un neurone est répartie sur 1 à 4 pixels, on peut ainsi avoir un champ d'observation de 1 à 4 millions de neurones sur une surface totale de 256 10^6 $\mu$m$^2$.

### Réseau de neurone - Electrolyte

On peut prévoir comme échantillon 100 un réseau de neurones biologiques, par exemple au sein d'une cellule microfluidique, typiquement en polydimetilsiloxane (PDMS) ou polycarbonate, immergé dans un bain d'électrolyte, typiquement un milieu de culture cellulaire.

Dans le mode de réalisation « transmission », le réseau de neurone est disposé entre la couche de conducteurs électriques anisotropes et le polariseur supérieur, avantageusement au contact de ladite couche de conducteurs électriques anisotropes. On peut également placer une couche fine de molécules d'adhésion cellulaire (typiquement de la poly-L-lysine) ou une autre couche fine d'un isolant qui atténue très peu le champ électrique.

### Fonctionnement

Les cristaux liquides, sous l'action d'un champ électrique, sont soumis à un couple de forces et s'orientent selon les lignes de ce champ.

En fonction de leur configuration, les cristaux liquides transmettent le faisceau incident de manière plus ou moins intense. Ils fonctionnent un peu comme un diaphragme optique, piloté par l'intensité d'un champ électrique qui leur est appliqué.

Grâce à cette caractéristique, l'invention fonctionne comme un transducteur qui transforme l'activité électrique d'un échantillon, en l'espèce un ensemble d'au moins un neurone, en un signal optique capté sur un capteur optique.

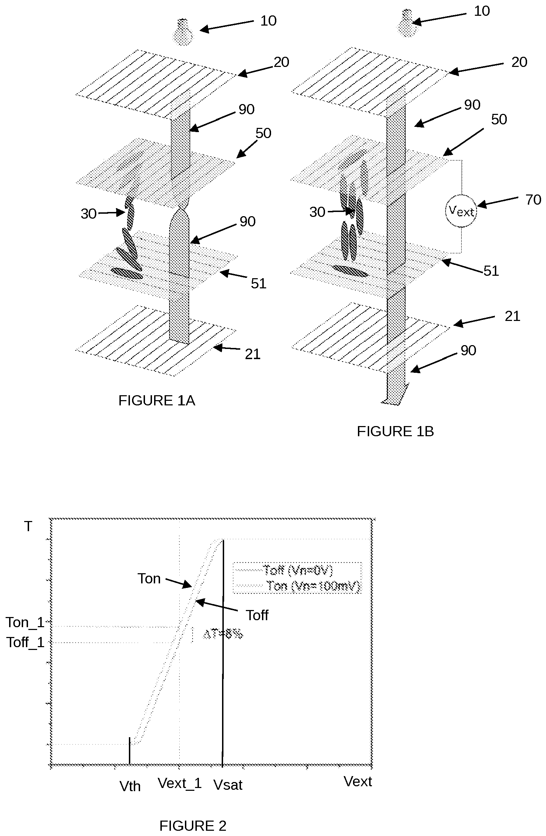

Comme illustré figure 1A et 1B, d'un bord à l'autre de la couche de cristaux liquides, une contrainte de torsion s'exerce sur le cristal liquide « Twisted nematic » au repos. La lumière du faisceau incident est transmise d'une couche d'alignement à l'autre, sa direction de polarisation tournant en même temps que le nématique (configuration en hélice).

Dans le mode de réalisation « transmission », au repos, du fait de leur configuration TN, la polarisation du faisceau incident en sortie des cristaux liquides est perpendiculaire à celle en sortie du polariseur supérieur. Et comme les polariseurs sont parallèles, l'axe de polarisation du faisceau incident en sortie des cristaux liquides est perpendiculaire à l'axe de polarisation du polariseur inférieur donc le faisceau incident est arrêté en transmission par le polariseur inférieur : le faisceau incident n'atteint pas le capteur optique et aucun signal électrique n'est généré par celui-ci ; ce qui permet d'obtenir un signal selon l'un des deux contrastes

De manière connue, lorsqu'une tension externe Vext leur est appliquée, il se créé un champ entre les électrodes et les cristaux liquides soumis à ces lignes de champ s'alignent avec celles-ci.

Ainsi, dans le mode de réalisation « transmission », lorsqu'une tension externe Vext leur est appliquée, le faisceau incident peut traverser les cristaux liquides et le polariseur inférieur pour atteindre le capteur optique qui génère un signal électrique.

Dans le cas où le capteur optique est une matrice de pixels, on prévoit avantageusement une étape de calibration dans laquelle la réponse optique du capteur optique est enregistrée dans une mémoire lorsqu'une tension externe Vext est appliquée aux cristaux liquides, le faisceau incident couvrant tout ou partie dudit capteur optique.

On peut prévoir d'enregistrer une première image initiale, dite image des blancs ou image des noirs en fonction du premier ou du deuxième contraste choisi, correspondant à la réponse optique du capteur optique lorsqu'une tension externe Vext est appliquée entre lesdites électrodes, en l'absence d'échantillon et de préférence en présence du support d'échantillon, par exemple une cellule micro fluidique.

On peut prévoir d'enregistrer une deuxième image initiale, dite image initiale inactive, correspondant à la réponse optique du capteur optique lorsqu'une tension externe Vext est appliquée entre lesdites électrodes, en présence d'un échantillon inactif.

Lorsqu'un neurone est inactif, il ne génère pas de signal électrique. En revanche, lorsqu'un neurone est actif, il génère, notamment au niveau du corps cellulaire, un signal électrique dont l'amplitude est d'environ 100 mV maximal.

En effet, toutes les cellules neuronales présentent un potentiel de repos qui correspond à un équilibre de charge entre leur milieu intra et extracellulaire de part et autre de la membrane plasmique. Les neurones au sein d'un réseau communiquent entre eux en propageant des informations sous forme de potentiels d'action.

Un potentiel d'action est généré par un flux de charges à travers les canaux ioniques membranaires provoquant une dépolarisation locale de la membrane, soit un déséquilibre de ces charges qui se propage ainsi de proche en proche.

Dans les deux cas (actif ou inactif) la membrane peut être représentée par une capacité Cm en parallèle avec une résistance Rm, les deux armatures du condensateur représentant les milieux intra et extracellulaire et la résistance modélisant le flux d'ion à travers les canaux ionique.

Le potentiel membranaire des neurones activé peut être représenté par une source de tension Vn en série avec sa résistance Rn, l'ensemble étant lui-même en parallèle avec le circuit RC précédent.

Dans le cas d'un neurone traversé par un potentiel d'action, la différence de potentiel membranaire atteint une amplitude de 100mV, passant d'une valeur de -30mV correspondant au potentiel de repos, à +70mV, ce qui est traduit dans le circuit en attribuant une valeur de 100 mV à Vn, correspondant à l'état à l'état d'excitation maximal du neurone.

A l'inverse, quand le neurone est au repos (inactif), le potentiel membranaire reste constant, c'est ce qu'on associe à l'état bas, en fixant Vn=0 V.

Dans le cas de culture in vitro, les neurones sont en contact avec le reste du dispositif via une chambre de culture, où ils sont baignés dans leur milieu (Neurobasal (marque déposée), solution électrolytique de conductivité s~1 S.m$^{-1}$). La distance entre l'électrode supérieure et le neurone est représenté par une résistance Re avantageusement constante mais peut aussi être variable selon la géométrie du système.

Dans un mode de réalisation, le puits de culture, c'est-à-dire l'échantillon, par exemple en PDMS, contenant les cellules est un puits de forme cylindrique, en l'espèce de 5 mm de rayon et 0.5 cm de hauteur.

La valeur de la résistance Re dépend de la géométrie du puits de culture contenant les neurones et est donné par Re = rho*l/A, où rho est la résistivité du milieu de culture utilisé, l est la hauteur du puits, et A sa surface. En l'espèce R=5mm.

Le conducteur anisotrope est avantageusement un réseau régulier de conducteurs verticaux encapsulés dans une matrice isolante. Avantageusement, ces conducteurs sont des nanofils. Le comportement de chaque nanofil peut être décrit par une résistance R$_{nf}$ dépendant de sa géométrie (longueur l et rayon r$_{nf}$) et de la résistivité du matériau utilisé.

$$R_{nf} = rho_{nf}*l \,/\, (Pi* r_{nf}^2) \text{ avec } rho_{nf} \text{ la résistivité du nanofil.}$$

avec rho$_{nf}$ la résistivité du nanofil.

Le nombre n de nanofils connectés au neurone étudié et sollicités pour transmettre localement le signal électrique de ce neurone actif à la couche de cristaux liquide est donné par :

$$n = (r_{nf}(4-2\sqrt{2})+2e+2\sqrt{2}r_n) \,/\, (4\,r_{nf} +2e)$$

où e est l'espacement entre les nanofils du matériau anisotrope et r$_n$ est le rayon du neurone.

En définissant R$_{ac}$ la résistance équivalente de l'ensemble de ces n nanofils connectés en parallèle au neurone étudié, on a R$_{ac}$ = R$_{nf}$ / n.

A haute fréquence (typiquement au-delà de 10 kHz), une cellule à cristaux liquides en configuration nématique twistée peut être modélisée par un condensateur C$_{lc1}$ en parallèle avec une résistance Rcl en série avec un autre condensateur C$_{lc2}$.

Le champ électrique extérieur appliqué à l'ensemble du dispositif est une source de tension alternative AC, avantageusement délivrant un signal carré d'amplitude variable Vext et de fréquence F comprise entre 0.1Hz et 100Ghz, et en l'espèce de 100KHz.

Pour simplifier le modèle électrique équivalent, toutes les résistances de contacts ont été négligées mais peuvent rentrer en considération dans le modèle si la perte de potentiel induite est supérieure à 0.001V.

On exprime ensuite en fonction de tous ces paramètres Vcl la tension vue par la couche de cristaux liquides.

$$V_{cl} = \frac{Z_{cl}(V_{ext}+V_n)(Z_m+R_n)+R_nV_n}{Zcl(Z_m+R_n)+(Z_m+R_n)(R_e+R_{ac})+Z_mR_n}$$

Avec Z$_{cl}$ le module de l'impédance équivalente à l'ensemble de la couche de cristaux liquides, tel que

$$Z_{cl} = \sqrt{\frac{(R_{cl}C_{cl2}{}^2 C_{cl1}\omega^3)-(R_{cl}C_{cl2}\,C_{cl1}\omega^2)^2}{(C_{cl2}{}^2 C_{cl1}{}^2\omega^4)(R_{cl}{}^2+1)}+\frac{(R_{cl}{}^2 C_{cl2}{}^2 C_{cl1}\omega^3)^2-(C_{cl2}\,C_{cl1}\omega^2)}{(C_{cl2}{}^2 C_{cl1}{}^2\omega)(R_{cl}{}^2+1)}}$$

Où $\omega$ est la fréquence angulaire donnée par $\omega$ = 2PiF (F la fréquence) ; et
Zm l'impédance équivalente à l'association en parallèle de Rm et Cm respectivement la résistance et la capacité de la membrane du neurone tel que

$$Z_m = \sqrt{\frac{R_m{}^2}{1+(R_m C_m\omega)^2}-\frac{R_m{}^2 C_m\omega^2}{1+(R_m C_m\omega)^2}}$$

Connaissant la courbe électro-optique T=f(V) de la cellule à cristaux liquides utilisée, on peut sortir T l'intensité de la lumière transmise à travers l'ensemble du dispositif grâce au capteur optique.

En l'espèce, T = 0.8 $V_{cl}$-1.1 entre la tension de seuil Vth et la tension de saturation Vsat.

Avec $T_{black}$ l'intensité optique du système sans neurone pour une tension Vext appliquée, on choisit de préférence la valeur Vext de sorte que ($T_{on}$ - $T_{off}$)/$T_{black}$> S,
Avec
S la sensibilité du capteur optique ;
$T_{on}$ l'intensité optique du système avec un neurone actif, pour une tension Vext appliquée ; et
$T_{off}$ l'intensité optique du système avec le neurone inactif, pour une tension Vext appliquée.

Le signal électrique d'un neurone actif perturbe localement le champ électrique généré entre les deux électrodes dans lequel il baigne. L'invention permet de détecter cette perturbation ou modification locale de champ électrique.

En effet, la réponse optique (transmittance) des cristaux liquides à éclairage constant en fonction de la valeur de la tension externe Vext est illustrée figure 2 selon deux courbes, une courbe Toff pour laquelle un neurone est inactif et une courbe Ton pour laquelle un neurone est actif et génère une différence de tension de 100 mV, qui s'ajoute au champ externe Vext. La forme de la réponse optique, mesurée par un capteur optique, est globalement indépendante de la fréquence de la source de tension pour Vext, que le neurone soit actif ou inactif.

En deçà d'une valeur seuil Vth, ou au-delà d'une valeur de saturation Vsat, de la tension externe Vext, la transmission optique T est sensiblement constante à intensité de la source constante. Les valeurs Vth et Vsat dépendent notamment de la nature des cristaux liquides ; elles peuvent être connues ou déterminées par mesures. De préférence, on règle donc la valeur de la tension externe Vext telle que Vth < Vext < Vsat.

Dans ces conditions, avec une valeur de tension externe Vext = Vext_1, en l'espèce environ 2V, on observe une valeur de transmission optique Toff_1 lorsque le faisceau incident passe par un neurone inactif 100_I et une valeur de transmission optique Ton_1 lorsque le faisceau incident passe par un neurone actif 100_A. Selon les conditions expérimentales utilisées, on a pu montrer que l'écart de transmittance entre Toff_1 et Ton_1 est de 8% avec une sensibilité de capteur à 0,1%.

Cet écart de transmittance revient à faire une différence entre une image prise par le capteur optique lorsqu'au moins un neurone est actif et l'image initiale inactive. Il est ainsi possible d'imaginer l'activité d'un seul neurone, détectée par un ensemble de un à quelques pixels du capteur optique.

La correspondance entre la position d'un neurone actif dans l'échantillon et la position du ou des récepteurs optiques du capteur optique détectant cette activité est assurée par le caractère anisotrope de chaque conducteur électrique anisotrope.

L'activation (naturelle ou induite) d'un ensemble d'au moins un neurone modifie localement la valeur du champ électrique, de sorte que les cristaux liquides au droit dudit ou desdits neurones actifs changent de configuration et s'alignent dans le sens de propagation du faisceau incident, parallèle au sens des lignes de champ, et permettent la transmission dudit faisceau incident à travers la couche de cristaux liquides. A noter que les cristaux liquides qui changent de configuration sont « au droit » dudit ou desdits neurones actifs du fait que le sens de propagation du faisceau incident est parallèle au sens des lignes de champ grâce aux conducteurs électriques anisotropes, et perpendiculaire aux couches d'alignement. Si l'unique direction de propagation de chaque conducteur électrique anisotrope n'est pas perpendiculaire aux polariseurs, il se créé un décalage, ou *offset*, dans l'image obtenue par le capteur optique, qui peut être traité par calibration.

Grâce à l'invention, il est possible d'observer simultanément l'activité d'un neurone individuel et l'activité d'un ensemble de neurones au sein d'un réseau de neurones comprenant jusqu'à plusieurs millions de neurones.

En outre, l'activité d'un neurone ou d'un ensemble de neurones peut être observée sur une grande échelle, un grand champ d'observation, c'est-à-dire à l'échelle du réseau de neurone dans son ensemble pourvu que la surface de celui-ci soit sensiblement égale à la surface du capteur optique, par exemple d'une surface de 8 cm$^2$.

On peut prévoir un bloc optique comprenant un ensemble d'au moins une lentille, positionné entre le support 110 et le capteur optique 80, de sorte que la surface dudit capteur 80 peut être plus petite que celle de l'échantillon.

La surface d'un neurone est d'environ 75 $\mu$m$^2$. Avec un capteur optique possédant des pixels d'environ 1,7 $\mu$m$^2$, il n'y a pas de problèmes de résolution optique.

Avantageusement, l'imagerie obtenue avec l'invention peut se faire sans lentille.

En outre, l'invention est sans contact avec l'échantillon, donc non destructrice dudit échantillon.

L'invention n'est pas limitée aux modes de réalisation précédemment décrits, on peut prévoir en outre, en combinaison avec l'un quelconque desdits modes de réalisation, un ensemble d'au moins un guide d'onde optique, par exemple sous forme de fibre(s) optique(s) pour guider le faisceau incident entre la sortie du support 110 et le capteur optique 80, ce qui permet de déporter ledit capteur optique.

Nomenclature

| | |
|---|---|
| 10 | source lumineuse |
| 20 | polariseur supérieur |
| 21 | polariseur inférieur |
| 30 | cristaux liquides |
| 40 | Couche de conducteurs électriques anisotropes |
| 41 | conducteur électrique anisotrope individuel |
| 50 | couche d'alignement supérieure |
| 51 | couche d'alignement inférieure |
| 60 | électrode supérieure |
| 61 | électrode inférieure |
| 70 | source de tension alternative externe |
| 80 | capteur optique |
| 90 | faisceau incident |
| 100 | Échantillon |
| 100_A | Echantillon actif |
| 100_I | Echantillon inactif |
| 110 | Support d'échantillon |
| 120 | Séparateur de faisceau |

**Revendications**

1. Dispositif électro-optique pour la détection optique d'un champ électrique généré localement par un échantillon (100), le dispositif comprenant :

   - Une source (70) de tension alternative ;
   - Un polariseur supérieur (20) linéaire et un polariseur inférieur (21) linéaire ;
   - Une couche de cristaux liquides (30), comprise entre une couche d'alignement supérieure (50) et une couche d'alignement inférieure (51) présentant deux directions d'alignement perpendiculaires entre elles ;
   - Une électrode supérieure (60) et une électrode inférieure (61), connectées électriquement à la source (70) de tension alternative, et disposées de sorte que lorsqu'une différence de tension (Vext) est appliquée entre lesdites électrodes par ladite source de tension alternative, un champ électrique se crée entre les deux électrodes, la couche de cristaux liquides baignant dans ledit champ électrique ;
   - Une couche de conducteurs électriques anisotropes (40), disposée entre les électrodes (60, 61) ;

   **Caractérisé en ce qu'**il comprend en outre :

   - ledit échantillon (100) placé dans l'espace délimité par les deux électrodes pour baigner dans ledit champ électrique créé entre les deux électrodes ;
   - un capteur optique
   - une source lumineuse (10) configurée pour émettre un faisceau incident (90) en lumière monochromatique en direction du capteur optique (80), par transmission ou réflexion dudit faisceau incident à travers la couche de cristaux liquides (30) ;

et **caractérisé en ce que** :

- ladite couche de cristaux liquides (30) est à polarisation variable active,
- La couche de conducteurs électriques anisotropes (40) est configurée pour transmettre ledit champ électrique créé entre les deux électrodes selon une unique direction de propagation sécante aux couches d'alignement ;
- Ladite couche de conducteurs électriques anisotropes est disposée au contact de la couche d'alignement supérieure ou séparée de celle-ci par le polariseur supérieur.

2. Dispositif selon la revendication 1, dans lequel ledit échantillon (100) est sans contact avec ladite électrode supérieure (60) et ladite électrode inférieure (61).

3. Dispositif selon l'une quelconque des revendications précédentes, dans lequel ladite électrode supérieure (60) et ladite électrode inférieure (61) sont disposées de sorte que lorsque la tension externe (Vext) est appliquée à partir de ladite source de tension alternative (70) : ledit échantillon (100), ladite couche de conducteurs électriques anisotropes (40) et ladite couche de cristaux liquides (30) sont soumis à certaines au moins des lignes de champ reliant les deux électrodes, le champ électrique généré localement par ledit échantillon (100) venant perturber ledit champ électrique créé entre les deux électrodes.

4. Dispositif selon l'une quelconque des revendications précédentes, dans lequel ledit échantillon (100) comprend un réseau de neurones biologiques.

5. Dispositif selon l'une quelconque des revendications précédentes, dans lequel le polariseur supérieur (20) et le polariseur inférieur (21) sont parallèles entre eux et disposés de part et d'autre de la couche de cristaux liquides (30).

6. Dispositif selon l'une quelconque des revendications 1 à 4, dans lequel le polariseur supérieur (20) et le polariseur inférieur (21) sont perpendiculaires entre eux ; le polariseur supérieur étant disposé entre la couche d'alignement supérieure (50) et la couche de conducteurs électriques anisotropes (40) ; le dispositif comprenant en outre un séparateur de faisceau (120) configuré pour diriger un faisceau incident (90) issu d'une source lumineuse et passant par le polariseur inférieur (21) vers la couche de cristaux liquides (30) en passant successivement, depuis la polariseur inférieur (21), par le séparateur de faisceau (120), puis les cristaux liquides (30) et, après réflexion sur la couche de conducteurs électriques anisotropes (40), repasse par la couche de cristaux liquides (30), éventuellement le séparateur de faisceau (120), et le capteur optique (80), sans passer par le polariseur inférieur (21).

7. Dispositif selon l'une quelconque des revendications précédentes, dans lequel ledit faisceau incident (90) parcourt un chemin optique, la direction d'alignement de la première couche d'alignement étant parallèle à la direction de polarisation du premier polariseur rencontré sur le chemin optique dudit faisceau incident (90).

8. Dispositif selon l'une quelconque des revendications précédentes, comprenant en outre ledit capteur optique (80), configuré pour détecter le faisceau optique (90) de la source lumineuse (10) après transmission ou réflexion dudit faisceau optique à travers la couche de cristaux liquides (30).

9. Dispositif selon l'une quelconque des revendications précédentes, dans lequel les cristaux liquides (30) sont des cristaux liquides PCH5 nématiques à 37°C et la tension externe (Vext) est comprise entre 2V et 5V.

10. Dispositif selon l'une quelconque des revendications précédentes, comprenant en outre une mémoire et un calculateur programmable comprenant des instructions de code de programme pour :

- enregistrer dans ladite mémoire :
- une image initiale inactive correspondant à la réponse optique des cristaux liquides (30) lorsque ledit échantillon (100) n'émet aucun champ électrique ;
- une image active correspondant à la réponse optique des cristaux liquides (30) lorsque ledit échantillon (100) émet un champ électrique localement; et pour

- calculer la différence entre l'image initiale inactive et l'image active.

**Patentansprüche**

1. Elektrooptische Vorrichtung zur optischen Erkennung eines elektrischen Feldes, das lokal durch eine Probe (100) erzeugt wird, wobei die Vorrichtung umfasst:

   - eine Wechselspannungsquelle (70);
   - einen oberen Linearpolarisator (20) und einen unteren Linearpolarisator (21);
   - eine Flüssigkristallschicht (30), die zwischen einer oberen Ausrichtungsschicht (50) und einer unteren Ausrichtungsschicht (51) enthalten ist, die zwei zueinander senkrechte Ausrichtungsrichtungen aufweisen;
   - eine obere Elektrode (60) und eine untere Elektrode (61), die elektrisch mit der Wechselspannungsquelle (70) verbunden sind und derart angeordnet sind, dass, wenn durch die Wechselspannungsquelle eine Spannungsdifferenz (Vext) zwischen den Elektroden angelegt wird, ein elektrisches Feld zwischen den zwei Elektroden erzeugt wird, wobei die Flüssigkristallschicht in dem elektrischen Feld schwimmt;
   - eine Schicht von anisotropen elektrischen Leitern (40), die zwischen den Elektroden (60, 61) angeordnet ist;

   **dadurch gekennzeichnet, dass** sie ferner umfasst:

   - die Probe (100), die in dem durch die zwei Elektroden begrenzten Raum platziert ist, um in dem zwischen den zwei Elektroden erzeugten elektrischen Feld zu schwimmen;
   - einen optischen Sensor
   - eine Lichtquelle (10), die ausgestaltet ist, um einen einfallenden Strahl (90) aus monochromatischem Licht in Richtung des optischen Sensors (80), durch Durchlassen oder Reflexion des einfallenden Strahls durch die Flüssigkristallschicht (30), auszustrahlen;

   und **dadurch gekennzeichnet, dass**:

   - die Flüssigkristallschicht (30) aktive variable Polarisation aufweist,
   - die Schicht von anisotropen elektrischen Leitern (40) ausgestaltet ist, um das zwischen den zwei Elektroden erzeugte elektrische Feld gemäß einer einzigen Ausbreitungsrichtung durchzulassen, die die Ausrichtungsschichten schneidet;
   - die Schicht von anisotropen elektrischen Leitern im Kontakt mit der oberen Ausrichtungsschicht oder durch den oberen Polarisator davon getrennt angeordnet ist.

2. Vorrichtung nach Anspruch 1, wobei die Probe (100) ohne Kontakt mit der oberen Elektrode (60) und der unteren Elektrode (61) ist.

3. Vorrichtung nach einem der vorhergehenden Ansprüche, wobei die obere Elektrode (60) und die untere Elektrode (61) derart angeordnet sind, dass, wenn die externe Spannung (Vext) ausgehend von der Wechselspannungsquelle (70) angelegt wird: die Probe (100), die Schicht von anisotropen elektrischen Leitern (40) und die Flüssigkristallschicht (30) zumindest gewissen von den Feldlinien unterworfen sind, die die zwei Elektroden verbinden, wobei das lokal durch die Probe (100) erzeugte elektrische Feld das zwischen den zwei Elektroden erzeugte elektrische Feld stört.

4. Vorrichtung nach einem der vorhergehenden Ansprüche, wobei die Probe (100) ein Netz biologischer Neuronen umfasst.

5. Vorrichtung nach einem der vorhergehenden Ansprüche, wobei der obere Polarisator (20) und der untere Polarisator (21) zueinander parallel sind und auf beiden Seiten der Flüssigkristallschicht (30) angeordnet sind.

6. Vorrichtung nach einem der Ansprüche 1 bis 4, wobei der obere Polarisator (20) und der untere Polarisator (21) senkrecht zueinander sind; wobei der obere Polarisator zwischen der oberen Ausrichtungsschicht (50) und der Schicht von anisotropen elektrischen Leitern (40) angeordnet ist; wobei die Vorrichtung ferner einen Strahlteiler (120) umfasst, der ausgestaltet ist, um einen einfallenden Strahl (90), der von einer Lichtquelle stammt und über den unteren Polarisator (21) hin zu der Flüssigkristallschicht (30) verläuft, indem er nacheinander von dem unteren Polarisator (21), über den Strahlteiler (120), dann die Flüssigkristalle (30) verläuft und, nach der Reflexion auf der Schicht von anisotropen elektrischen Leitern (40), erneut über die Flüssigkristallschicht (30), gegebenenfalls den Strahlteiler (120) und den optischen Sensor (80) verläuft, ohne über den unteren Polarisator (21) zu verlaufen.

7.  Vorrichtung nach einem der vorhergehenden Ansprüche, wobei der einfallende Strahl (90) einen Lichtweg durchläuft, wobei die Ausrichtungsrichtung der ersten Ausrichtungsschicht parallel zur Polarisationsrichtung des ersten Polarisators ist, dem auf dem Lichtweg des einfallenden Strahls (90) begegnet wird.

8.  Vorrichtung nach einem der vorhergehenden Ansprüche, die ferner den optischen Sensor (80) umfasst, der ausgestaltet ist, um den optischen Strahl (90) der Lichtquelle (10) nach dem Durchlassen oder der Reflexion des optischen Strahls durch die Flüssigkristallschicht (30) zu erkennen.

9.  Vorrichtung nach einem der vorhergehenden Ansprüche, wobei die Flüssigkristalle (30) PCH5-Flüssigkristalle sind, die bei 37 °C nematisch sind und die externe Spannung (Vext) zwischen 2V und 5V enthalten ist.

10. Vorrichtung nach einem der vorhergehenden Ansprüche, die ferner einen Speicher und einen programmierbaren Rechner umfasst, der Programmcodebefehle umfasst zum:

    - Aufzeichnen in dem Speicher:

        • eines inaktiven Ausgangsbildes, das der optischen Reaktion der Flüssigkristalle (30) entspricht, wenn die Probe (100) keinerlei elektrisches Feld emittiert;
        • eines aktiven Bildes, das der optischen Reaktion der Flüssigkristalle (30) entspricht, wenn die Probe (100) lokal ein elektrisches Feld emittiert; und zum:

    - Berechnen der Differenz zwischen dem inaktiven Ausgangsbild und dem aktiven Bild.


**Claims**

1.  An electro-optical device for the optical detection of an electric field locally generated by a sample (100), the device comprising:

        - An alternating voltage source (70);
        - A linear upper polarizer (20) and a linear lower polarizer (21);
        - A liquid crystal layer (30) comprised between an upper alignment layer (50) and a lower alignment layer (51) having two directions of alignment perpendicular to each other;
        - An upper electrode (60) and a lower electrode (61), electrically connected to the alternating voltage source (70), and disposed so that when a voltage difference (Vext) is applied between said electrodes by said alternating voltage source, an electric field is created between the two electrodes, the liquid crystal layer being immersed in said electric field;
        - A layer of anisotropic electrical conductors (40) disposed between the electrodes (60, 61);

    **characterized in that** it further comprises:

        - said sample (100) placed in the space delimited by the two electrodes to be immersed in said electric field created between the two electrodes;
        - an optical sensor;
        - a light source (10) configured to emit an incident beam (90) in monochromatic light towards the optical sensor (80), by transmission or reflection of said incident beam through the liquid crystal layer (30) ;
        and **characterized in that**
        - said liquid crystal layer (30) is of active variable polarization,
        - the layer of anisotropic electrical conductors (40) is configured to transmit said electric field created between the two electrodes along a single direction of propagation intersecting the alignment layers;
        - said layer of anisotropic electrical conductors is placed in contact with of the upper alignment layer or separated therefrom by the upper polarizer.

2.  The device according to claim 1, wherein said sample (100) is free from contact with said upper electrode (60) and said lower electrode (61).

3.  The device according to any one of the preceding claims, wherein said upper electrode (60) and said lower electrode (61) are disposed such that, when the outer voltage (Vext) is applied from said alternating voltage source (70): said sample (100), said layer of anisotropic electrical conductors (40) and said liquid crystal layer (30) are subjected to at least some of the field lines connecting the two electrodes, the electric field locally generated by said sample (100) disturbing said electric field created between the two electrodes.

4.  The device according to any one of the preceding claims, wherein said sample (100) comprises a network of biological neurons.

5.  The device according to any one of the preceding claims, wherein the upper polarizer (20) and the lower polarizer (21) are parallel to each other and disposed on either side of the liquid crystal layer (30) .

6.  The device according to any one of claims 1 to 4, wherein the upper polarizer (20) and the lower polarizer (21) are perpendicular to each other; the upper polarizer being disposed between the upper alignment layer (50) and the layer of anisotropic electrical conductors (40); the device further comprising a beam splitter (120) configured to direct an incident beam (90) derived from a light source and passing through the lower polarizer (21) toward the liquid crystal layer (30) by passing successively, from the lower polarizer (21), through the beam splitter (120), and then the liquid crystals (30) and, after reflection on the layer of anisotropic electrical conductors (40), passes back through the liquid crystal layer (30), possibly the beam splitter (120), and the optical sensor (80), without passing through the lower polarizer (21).

7.  The device according to any one of the preceding claims, wherein said incident beam (90) travels along an optical path, the direction of alignment of the first alignment layer being parallel to the direction of polarization of the first polarizer encountered on the optical path of said incident beam (90) .

8.  The device according to any one of the preceding claims, further comprising said optical sensor (80) configured to detect the optical beam (90) derived from the light source (10) after transmission or reflection of said optical beam through the liquid crystal layer (30).

9.  The device according to any one of the preceding claims, wherein the liquid crystals (30) are nematic liquid crystals PCH5 at 37 °C and the outer voltage (Vext) is comprised between 2V and 5V.

10. The device according to any one of the preceding claims, further comprising a memory and a programmable computer comprising program code instructions for:

   - recording in said memory:

      • an initial inactive image corresponding to the optical response of the liquid crystals (30) when said sample (100) emits no electric field;
      • an active image corresponding to the optical response of the liquid crystals (30) when said sample (100) emits an electric field locally; and for

   - calculating the difference between the initial inactive image and the active image.

FIGURE 1A

FIGURE 1B

FIGURE 2

FIGURE 3

FIGURE 7

FIGURE 4B

FIGURE 4A

FIGURE 5

FIGURE 6